# EUROPÄISCHE PATENTSCHRIFT

(11) **EP 1 977 666 B1**
(45) Veröffentlichungstag und Bekanntmachung des Hinweises auf die Patenterteilung: **22.09.2010**
(21) Anmeldenummer: 08003149.5
(22) Anmeldetag: 21.02.2008
(51) Int. Cl.: A47J 31/00

(54) **Verfahren und Vorrichtung zur Herstellung von Caffe Latte Macchiato**
Method and device for producing caffe latte macchiato
Procédé et dispositif de fabrication de café latte macchiato

(30) Priorität: 02.04.2007 DE 102007017450
(43) Veröffentlichungstag der Anmeldung: 08.10.2008
(73) Patentinhaber: NIRO-PLAN AG, 4663 Aarburg (CH)
(72) Erfinder: Bunge, Rainer, Prof., 8057 Zürich (CH)
(74) Vertreter: Lemcke, Brommer & Partner

(56) Entgegenhaltungen:
- WO-A-2008/022161

## Beschreibung

Die Erfindung fällt in das Gebiet der Herstellung von Heißgetränken. Sie betrifft ein Verfahren und eine Vorrichtung nach den Oberbegriffen der entsprechenden, unabhängigen Patentansprüche. Verfahren und Vorrichtung dienen zur Herstellung von Caffe Latte Macchiato (CLM).

Aus der WO-A-2008/022161 ist eine Vorrichtung bekannt geworden, bestehend aus einer Kaffee- und einer Milcheinheit. Weiterhin weist die Vorrichtung Mittel zur Schwingungsbeaufschlagung im Ultraschallbereich auf. Zur Zubereitung von Kaffee werden der Kaffee oder die Milch oder die Mischung von Kaffee und Milch mit Ultraschallschwingungen beaufschlagt.

CLM ist ein Heißgetränk auf der Basis von Milch und Kaffee. Es zeichnet sich dadurch aus, dass die Komponenten Milch, Kaffe und Milchschaum von unten nach oben in drei definierten übereinander liegenden Schichten angeordnet sind. Bei der Herstellung von CLM wird zunächst Milch in das Trinkgefäss gegeben, anschließend Milchschaum darüber geschichtet und dann der Kaffee zugegeben. Bei korrekter Herstellungsweise durchsickert der Kaffee die Schaumschicht und breitet sich auf der Grenzfläche Milch/Schaum aus, ohne sich dabei mit der Milch zu vermischen. Dadurch bildet sich eine scharfe Grenzfläche zwischen dem Kaffee und der Milch aus.

Die CLM Herstellung erfordert eine subtile Abstimmung vor allem folgender Parameter: Milchfettgehalt, Milchproteingehalt, Milchtemperatur, Kaffeetemperatur, Art des Kaffeebohnen, Wasserhärte, Dicke der Schaumschicht, Konsistenz der Schaumschicht, Fallhöhe des Kaffees, zeitliche Aufeinanderfolge der Prozessschritte und allfälliger Pausen zwischen diesen Schritten. Diese Parameter sind nicht voneinander unabhängig, sondern zum Teil miteinander in komplizierter Weise verknüpft.

Von Maschinen zur CLM Herstellung insbesondere vollautomatischen Kaffeemaschinen wird erwartet, dass sie ungeachtet veränderlicher Eigenschaften der Einsatzstoffe und Rahmenbedingungen robust und zuverlässig funktionieren. Die kommerziell erhältlichen Maschinen erfüllen dieses Kriterium nur ungenügend. Der Kaffee bildet anstatt einer scharfen Grenzschicht einen kontinuierlichen Übergang zur darunter vorliegenden Milch aus, es entstehen so genannte "Kaffee-Schlieren" in der Milch. Während fabrikneue Maschinen zumeist einen akzeptablen CLM bereitstellen, ist dies insbesondere bei Maschinen, welche sich bereits seit geraumer Zeit im Einsatz befinden, häufig nicht mehr der Fall. Die Ursachen hierfür sind überwiegend unklar.

Bekannt ist dem Fachmann, dass eine Pause zwischen der Zugabe des Schaums und der anschließenden Zugabe des Kaffees das Ergebnis deutlich verbessern kann. Bei der manuellen CLM Herstellung beträgt diese Pause typischerweise zwischen 10 und 30 Sekunden. In der Literatur findet sich allerdings kein Hinweis darauf, weshalb diese Pause wichtig ist. Es handelt sich also um rein empirisches Wissen.

Eine solche Warteperiode ist auch bei CLM-Maschinen typisch. Allerdings gerät man hierbei insbesondere im Segment der professionellen CLM-Maschinen in einen Optimierungskonflikt. Je länger die Pause dauert, umso besser wird zwar das Ergebnis, aber der Kunde ist nicht dazu gewillt lange auf sein Getränk zu warten.

Der Erfindung liegt die Aufgabe zugrunde, ein Verfahren und eine Vorrichtung zu schaffen, die es erlauben, einen hochwertigen CLM in kürzerer Zeit herzustellen, d.h. ohne dass eine erhebliche Pause zwischen der Schaumzugabe und der Kaffeezugabe notwendig ist.

Diese Aufgabe wird gelöst durch das Verfahren und die Vorrichtung, wie sie in den Patentansprüchen definiert sind. Nach dem erfindungsgemäßen Verfahren wird der Milchschaum mit Schwingungen im Ultraschallbereich beaufschlagt.

Die Versuche der Anmelderin haben völlig überraschend gezeigt, dass die Wartezeit zwischen der Schaumzugabe und der Kaffeezugabe durch die Beschallung des Schaums mit Ultraschall drastisch verkürzt werden kann.

Die diesbezüglichen Untersuchungen haben erbracht, dass bei der konventionellen Schaumherstellung - ungeachtet des optischen Eindrucks - der "Schaum" keineswegs nur aus aufgeschäumter Milch besteht, sondern dass in diesem auch Anteile an unaufgeschäumter Milch enthalten sind ("nasser" Schaum). Der branchenüblichen Konvention folgend werden in diesem Text die Begriffe "Schaum" oder "Milchschaum" nicht nur im engeren wissenschaftlichen Sinne benutzt, sondern auch als Bezeichnung für ein Schaum/Milch-Gemisch. Diese Definition bezieht sich insbesondere auch auf die Patentansprüche.

Wird dieses Gemisch aus Schaum und heißer Milch auf die Milch im Vorlagebehälter gegeben, so bildet sich keine saubere Grenzfläche aus, sondern vielmehr ein kontinuierlicher Übergang zwischen Milch und Schaum. Erst wenn man dieses Gemisch für beispielsweise 20 Sekunden stehen lässt, entmischen sich Schaum und Milch sukzessive. Hierbei "entwässert" der Schaum, indem die Milch nach unten abläuft. Gleichzeitig steigen in der Milch befindliche Luftblasen auf.

Erst dann bildet sich die scharfe Grenzfläche, zwischen Schaum und Milch, welche für einen guten CLM notwendig ist. Dieser Entmischungsvorgang wird durch die Beschallung mit Ultraschall sehr stark beschleunigt.

Das erfindungsgemäße Verfahren zeichnet sich insbesondere dadurch aus, dass durch die Ultraschallbehandlung die Wartezeit zwischen Schaumzugabe und Kaffeezugabe, und damit die Herstellungszeit für den CLM stark verkürzt wird.

Erfindungsgemäß reicht es aus, wenn die Beaufschlagung des Milchschaums mit Schwingungen für einige Sekunden erfolgt, etwa zwischen 0,5 Sekunden und 20 Sekunden und insbesondere zwischen 1 Sekunde und 6 Sekunden. Zwar hat eine längere Beschallung, also Beaufschlagung mit Schwingungen, eine Vergrößerung des Effekts zur Folge, indem sich die Milch noch vollständiger vom Milchschaum trennt; nachfolgend noch näher beschriebene Versuche haben jedoch ergeben, dass bereits das Entstehen einer ersten Grenzschicht zwischen Milch und Milchschaum ausreicht, um das gewünschte optimale Ergebnis bei der Herstellung eines Kaffee Latte Macchiato zu erhalten, nämlich ein Getränk, das aus drei voneinander deutlich unterscheidbaren Schichten besteht, nämlich aus flüssiger Milch im unteren Bereich, aus darüber befindlichem Kaffee mit allenfalls nur sehr geringen Milchanteilen und aus darüber schwimmendem Milchschaum.

Die Schwingungen können problemlos von einem Erreger in Richtung des Milchschaums ausgesendet werden, ohne dass hierbei Gefäße oder Gehäusewandungen etc. die Qualität der Schwingungserregung wesentlich beeinträchtigen.

Somit kann die Beaufschlagung des Milchschaums durch Schwingungen in einem separaten Gefäß, insbesondere in einem Vorlagebehälter stattfinden, das beispielsweise auch gleich das Trinkgefäß sein kann; ebenso kann jedoch auch die Beaufschlagung in einem separaten Vorlagebehälter, beispielsweise im Inneren einer Milcheinheit einer Kaffeemaschine erfolgen, von wo aus dann die Milch und der hiervon abgesetzte Milchschaum erst in ein Trinkgefäß gegeben werden.

Ebenso kann die Beaufschlagung im Durchlaufbetrieb oder auch im Chargenbetrieb erfolgen.

Was die Form der Beaufschlagung mit Schwingungen betrifft, so kann der Milchschaum entweder berührungslos den Ultraschallschwingungen ausgesetzt sein oder aber der den Milchschaum aufnehmende Behälter kann an den Ultraschallerreger angekoppelt sein und so die Schwingungen auf den Milchschaum übertragen. Geht man beispielsweise von einem - wie bei dem Versuchsaufbau verwendeten - Ultraschallbad als Ultraschallerreger aus, so spielt natürlich auch die Eintauchtiefe des den Milchschaum aufnehmenden Behälters in das Ultraschallbad eine Rolle. Auch die Intensität der Ultraschallschwingungen kann das Ergebnis beeinflussen.

Neben dem Verfahren zur Herstellung von Caffe Latte Macchiato stellt die vorliegende Erfindung auch zur Lösung der eingangs gestellten Aufgabe eine Vorrichtung zur Herstellung von Caffe Latte Macchiato zur Verfügung. Diese Vorrichtung besteht aus einer Kaffeeeinheit und einer Milcheinheit, wobei die Kaffeeeinheit zum Zuführen von Kaffee und die Milcheinheit zum Zuführen von zumindest Milchschaum dienen. Erfindungsgemäß weist die Vorrichtung zur Herstellung von Caffe Latte Macchiato vor allem Mittel zur Schwingungsbeaufschlagung des Milchschaums auf. Um nun die Milch vom Milchschaum in der gewünschten Art und Weise zu trennen, ist das Mittel zur Schwingungsbeaufschlagung des Milchschaums dazu in der Lage, Schwingungen im Ultraschallfrequenzbereich auszusenden und hiermit den Milchschaum zu beaufschlagen.

Die Mittel zur Schwingungsbeaufschlagung des Milchschaums können beispielsweise den Milchschaum berührungslos beaufschlagen oder an einen den Milchschaum aufnehmenden Behälter angekoppelt sein, so dass sie den Behälter mechanisch mit Schwingungen beaufschlagen und dieser die Schwingungen an den Milchschaum weitergibt. Der Behälter muss dabei nicht unbedingt ein Gefäß sein, in dem der Milchschaum ruht, sondern theoretisch kann der Milchschaum beim Fließen durch einen Leitungsabschnitt den Ultraschallschwingungen ausgesetzt sein.

Besonders zweckmäßig ist es, wenn der Milchschaum in einem separaten Vorlagebehälter aufgenommen ist, dort von den Ultraschallschwingungen beaufschlagt wird und anschließend in das Trinkgefäß gegeben werden kann, wo er dann erst vom aus der Kaffeeeinheit zugeführten Kaffee beaufschlagt wird. So lässt sich sicherstellen, dass die Ultraschallerregung unter immer gleichen Voraussetzungen im geeichten Vorlagebehälter erfolgt und nicht beispielsweise von der jeweiligen individuellen Tassengröße, Tassendicke etc. abhängig ist.

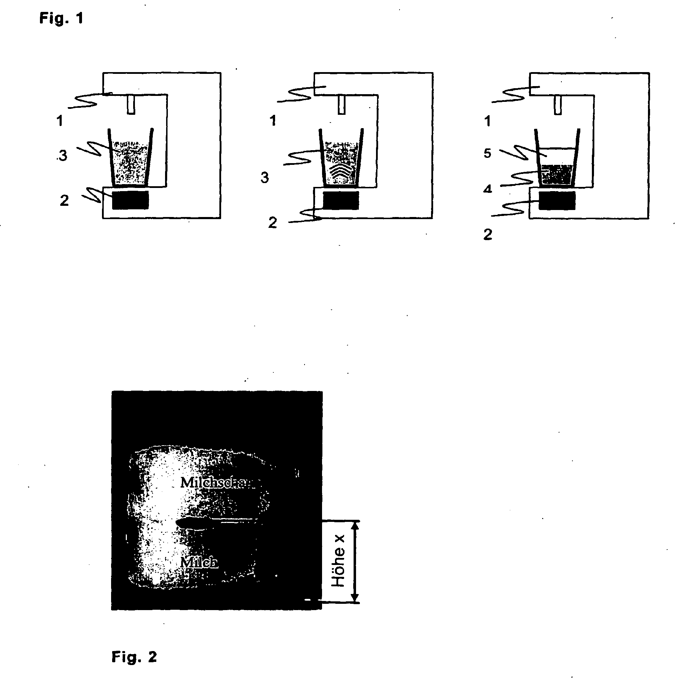

Weitere Merkmale und Vorteile der vorliegenden Erfindung ergeben sich aus der nachfolgenden Beschreibung eines Ausführungsbeispiels anhand der Zeichnung, die in Figur 1 schematisch die drei wichtigsten Phasen bei der Ultraschallbeaufschlagung von Milchschaum zeigt. Anschließend wird noch eine Versuchsserie und deren Ergebnisse dokumentiert.

Figur 1 zeigt eine erfindungsgemäße Vorrichtung 1 zur Herstellung von Caffe Latte Macchiato in drei einander entsprechenden schematischen Seitenansichten in den Figuren 1 a), 1 b) und 1 c). Wesentlicher Bestandteil der Vorrichtung 1 ist ein Ultraschallerreger 2, der als Mittel zur Schwingungsbeaufschlagung von Milchschaum dient und im Ausführungsbeispiel im unteren Bereich der Vorrichtung angeordnet ist. Oberhalb des Ultraschallerregers 2 ist ein Behälter 3 vorgesehen, der zum Aufnehmen von Milchschaum insbesondere während der Schwingungsbeaufschlagung dient.

Figur 1 a) zeigt nun den Zustand, in dem ein Gemisch aus Milchschaum und flüssiger Milch in den Behälter 3 eingefüllt ist, wie es beim Aufschäumen von Milch regelmäßig entsteht. In Figur 1 a) ist der Ultraschallerreger 2 noch inaktiv.

Figur 1 b) zeigt schematisch angedeutet den Beginn der Ultraschallerregung des Gemischs aus Milchschaum und Milch durch den Ultraschallerreger 2; und Figur 1 c) zeigt das Ergebnis nach einer Ultraschallerregung von etwa 5 Sekunden: Im Behälter 3 befindet sich nun im unteren Bereich flüssige blasenfreie Milch 4 und darüber ein Milchschaum 5, der nur noch einen sehr geringen Anteil an flüssiger Milch aufweist. Besonders wichtig ist die Ausbildung der Grenzschicht zwischen Milch 4 und Schaum 5; wenn die Grenzschicht deutlich erkennbar ist und nicht aus einem großen bzw. dicken Grenzbereich besteht, dann sind in der Regel auch die Voraussetzungen dafür erfüllt, dass bei einem anschließenden Zugeben von Kaffee der Kaffee sich auf der Grenzschicht absetzt und sich so gut wie gar nicht mit der flüssigen Milch vermischt, wohingegen er gleichzeitig den auf ihm schwimmenden Milchschaum nach oben schiebt, wodurch man insgesamt die für einen Caffe Latte Macchiato typischen drei verschiedenen Schichten aus flüssiger Milch, Kaffee und Milchschaum erhält.

Im Folgenden wird nun eine Versuchsserie beschrieben, die von den Anmeldern durchgeführt wurde, um die Systematik bei der Beaufschlagung von Milchschaum durch Ultraschall zu dokumentieren. Zunächst wurde untersucht, wie lange es dauert, bis sich die Milch im Milchschaum vollständig absetzt.

An einer Kaffeemaschine wurde ein Latte Macchiato in ein Becherglas herausgelassen (bei Grundeinstellungen). Vor der Kaffeezugabe wurde der Vorgang abgebrochen. Das Milch/Milchschaum-Gemisch wurde nun in ein Ultraschallbad gestellt. Nach 5 Sekunden Absetzzeit wurde das Becherglas entfernt und gemessen, wo sich die Grenzschicht zwischen Milch und Milchschaum ausgebildet hatte (Höhe der Milchschicht, siehe Fig. 2). Dieser Vorgang wurde wiederholt. Dabei wurde die Zeit im Ultraschallbad auf 10, 20, 40 und 80 Sekunden erhöht.

Nach fünf Sekunden im Ultraschallbad begann sich eine Grenzschicht zwischen Milch und Milchschaum zu bilden. Diese konnte vom Auge geradeso erfasst werden. Je länger das Milch/Milchschaum-Gemisch ins Ultraschallbad gestellt wurde, umso deutlicher bildete sich die Grenzschicht zwischen Milch und Milchschaum aus. Die Höhe der Milchschicht nahm dabei zu, da immer mehr Milch vom Milchschaum nach unten in den Milchteil floss. Nach einer bestimmten Zeit im Ultraschallbad nahm die Höhe der Milchschicht nicht mehr weiter zu, da sich Milch und Milchschaum vollständig getrennt hatten. Diese maximale Höhe der Milchschicht wurde auf 100% festgesetzt.

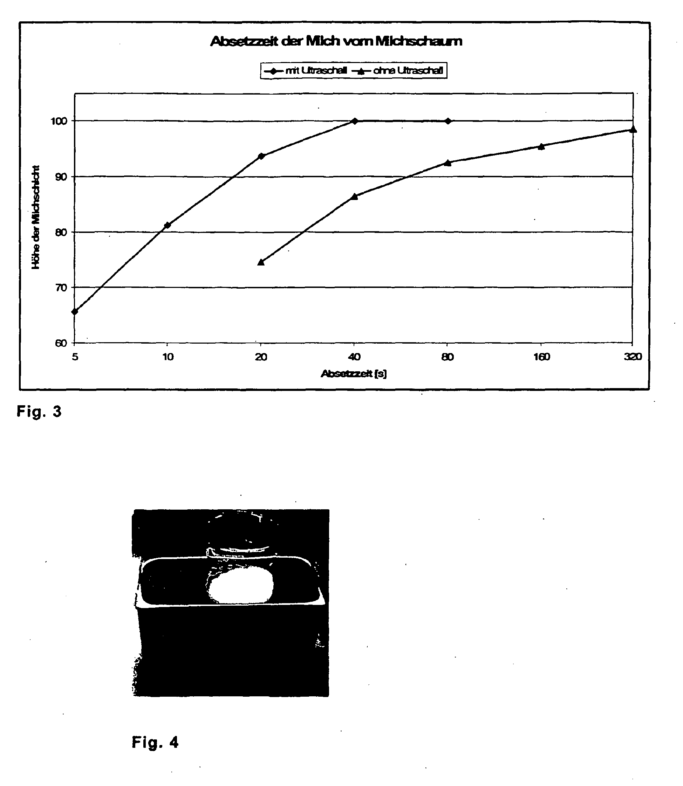

Im zugehörigen Diagramm (Fig. 3) wurde auf der x-Achse die Zeit im Ultraschallbad aufgetragen. Die y-Achse zeigt die Höhe der Milchschicht bezogen auf die maximale Höhe der Milchschicht (vollständige Trennung von Milch und Milchschaum).

Nach 5 Sekunden im Ultraschallbad war noch rund 1/3 der Milch im Milchschaum zurückgeblieben. Nach 10 Sekunden im Ultraschallbad betrug der Milchanteil im Milchschaum noch 1/4 der gesamten Milchmenge, nach 20 Sekunden noch 1/20. Nach 40 Sekunden hatten sich Milch und Milchschaum vollständig getrennt.

Die vollständige Trennung des Milch/Milchschaum-Gemisch im Ultraschallbad dauerte 35 bis 40 Sekunden. Bei der Latte Macchiato Herstellung darf dieser Vorgang aber nicht länger als 5 bis 10 Sekunden dauern.

Für die Herstellung eines Latte Macchiato ist entscheidend, dass zwischen Milch und Milchschaum eine klare Grenzschicht vorhanden ist. Diese tritt auch auf, wenn die Milch und der Milchschaum noch nicht vollständig getrennt sind. Nach 5 Sekunden im Ultraschallbad war die Grenzschicht zwischen Milch und Milchschaum geradeso erkennbar, nach 10 Sekunden war sie bereits deutlich ausgebildet. Deshalb wird davon ausgegangen, dass 5 bis 10 Sekunden im Ultraschallbad ausreichen, um eine Grenzschicht zu bilden, die eine Latte Macchiato Herstellung ermöglicht. Dies wurde nachfolgend noch genauer untersucht.

Hierbei wurde überprüft, wie lange das Milch/Milchschaum-Gemisch ins Ultraschallbad gestellt werden muss, um später eine klare Grenzschicht zwischen Milch und Kaffee zu erhalten.

An der Kaffeemaschine wurde ein Latte Macchiato herausgelassen (Milch und Milchschaum). Vor der Kaffeezugabe wurde der Vorgang abgebrochen. Das Milch/Milchschaum-Gemisch wurde nun eine bestimmte Zeit stehen gelassen (→Absetzzeit: 3, 6, 12, 24 und 60 Sekunden). Anschließend wurde der Kaffee zugegeben. Diese Versuche wurden wiederholt. Dabei wurde das Milch/Milchschaum-Gemisch aber in ein Ultraschallbad (siehe Fig. 4) gestellt - wiederum 3, 6, 12, 24 und 60 Sekunden lang. Anschließend wurde Kaffee zugegeben. Dadurch konnte verglichen werden, ob sich die Grenzschicht zwischen Milch und Kaffee beim Einsatz von Ultraschall besser ausbildete.

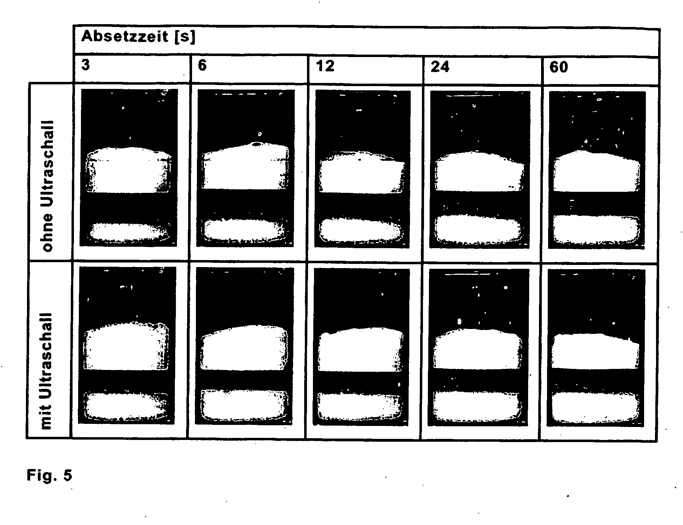

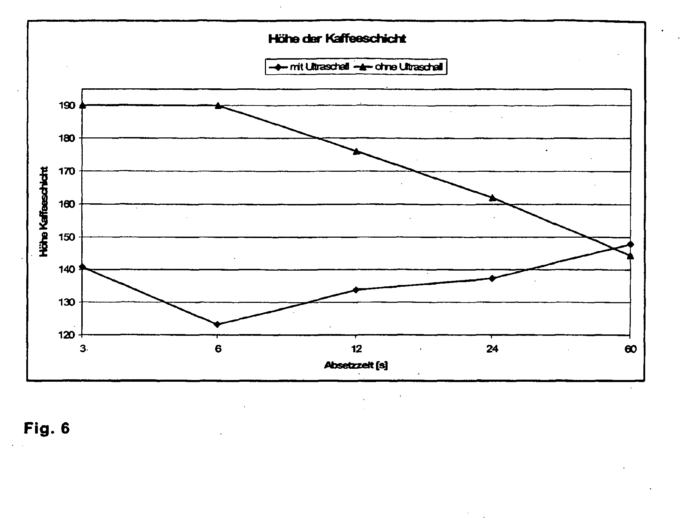

Die Abbildungen in Fig. 5 zeigen deutlich, dass durch Ultraschall die notwendige Absetzzeit deutlich verringert wurde. Ohne Ultraschall war eine Absetzzeit von 60 Sekunden notwendig, um eine klare Grenzschicht zwischen Milch und Kaffee zu erhalten. Mit Ultraschall stellte sich bereits nach drei Sekunden im Ultraschallbad eine klare Grenzschicht zwischen Milch und Kaffee ein.

Die Versuche zeigten, dass durch den Einsatz von Ultraschall die Absetzzeit deutlich verringert werden kann.

Zusammenfassend ermöglicht somit die vorliegende Erfindung ein Verfahren und eine Vorrichtung zur Herstellung von Kaffee Latte Macchiato in gegenüber herkömmlichen Verfahren verkürzter Zeit.

## Patentansprüche

1. Verfahren zur Herstellung von Caffe Latte Macchiato aus Kaffee, Milch und Milchschaum,
**dadurch gekennzeichnet,**
**dass** zumindest ein Anteil des Milchschaums vor dem Zuführen von Kaffee mit Schwingungen im Ultraschallbereich beaufschlagt wird.

2. Verfahren nach Anspruch 1,
**dadurch gekennzeichnet,**
**dass** die Beaufschlagung des Milchschaums mit Schwingungen in einem Vorlagebehälter stattfindet.

3. Verfahren nach Anspruch 2,
**dadurch gekennzeichnet,**
**dass** der Vorlagebehälter ein Trinkgefäß ist.

4. Verfahren nach Anspruch 1,
**dadurch gekennzeichnet,**
**dass** die Beaufschlagung des Milchschaums mit Schwingungen in einem separaten Vorlagebehälter erfolgt und dass anschließend nach erfolgter Beaufschlagung des Milchschaums die flüssige Milch und der Milchschaum in das Trinkgefäß ausgegeben werden und dort Kaffee zugeführt wird.

5. Verfahren nach Anspruch 4,
**dadurch gekennzeichnet,**
**dass** die Beaufschlagung mit Schwingungen im separaten Vorlagebehälter im Chargenbetrieb geschieht.

6. Verfahren nach Anspruch 4,
**dadurch gekennzeichnet,**
**dass** die Beaufschlagung mit Schwingungen im separaten Vorlagebehälter im Durchlaufbetrieb geschieht.

7. Verfahren nach einem der Ansprüche 1 bis 6,
**dadurch gekennzeichnet,**
**dass** die Beaufschlagung von Schwingungen zwischen 0,5 Sekunden und 20 Sekunden erfolgt, vorzugsweise zwischen 1 Sekunde und 6 Sekunden.

8. Vorrichtung zur Herstellung von Caffe Latte Macchiato, bestehend aus einer Kaffeeeinheit und einer Milcheinheit, wobei die Kaffeeeinheit zum Zuführen von Kaffee und die Milcheinheit zum Zuführen von zumindest Milchschaum dienen,
**dadurch gekennzeichnet,**
**dass** die Vorrichtung (1) Mittel (2) zur Schwingungsbeaufschlagung des Milchschaums aufweist, die den Milchschaum im Ultraschallfrequenzbereich beaufschlagen und dass durch die Mittel (2) zur Schwingungsbeaufschlagung zumindest ein Anteil des Milchschaums vor dem Zuführen von Kaffee mit Schwingungen im Ultraschallbereich beaufschlagbar ist.

9. Vorrichtung nach Anspruch 8,
**dadurch gekennzeichnet,**
**dass** die Mittel zur Schwingungsbeaufschlagung des Milchschaums den Milchschaum berührungslos beaufschlagen.

10. Vorrichtung nach zumindest einem der Ansprüche 8 und 9,
**dadurch gekennzeichnet,**
**dass** die Mittel zur Schwingungsbeaufschlagung des Milchschaums an einen den Milchschaum aufnehmenden Behälter (3) angekoppelt sind.

## Claims

1. Method of making caffe latte macchiato from coffee, milk and milk foam,
**characterised in that**
at least a portion of the milk foam is subjected to vibrations in the ultrasonic range prior to the addition of coffee.

2. Method according to claim 1,
**characterised in that**
the milk foam is subjected to vibrations in a receptacle.

3. Method according to claim 2,
**characterised in that**
the receptacle is a drinking vessel.

4. Method according to claim 1,
**characterised in that**
the milk foam is subjected to vibrations in a separate receptacle and then, once the milk foam has been acted upon, the liquid milk and the milk foam are dispensed into the drinking vessel and coffee is added thereto.

5. Method according to claim 4,
**characterised in that**
the subjection to vibrations in the separate receptacle is effected in batch operation.

6. Method according to claim 4,
**characterised in that**
the subjection to vibrations in the separate receptacle is effected in continuous operation.

7. Method according to any one of claims 1 to 6,
**characterised in that**
the subjection to vibrations is effected for from 0.5 second to 20 seconds, preferably from 1 second to 6 seconds.

8. Apparatus for making caffe latte macchiato, consisting of a coffee unit and a milk unit, the coffee unit serving to supply coffee and the milk unit serving to supply at least milk foam,
**characterised in that**
the apparatus (1) has means (2) for subjecting the milk foam to vibration, which means act upon the milk foam in the ultrasonic frequency range, and, by means of the means (2) for subjection to vibration, at least a portion of the milk foam is subjectable to vibrations in the ultrasonic range prior to the addition of coffee.

9. Apparatus according to claim 8,
**characterised in that**
the means for subjecting the milk foam to vibration act contactlessly upon the milk foam.

10. Apparatus according to at least one of claims 8 and 9,
**characterised in that**
the means for subjecting the milk foam to vibration are coupled to a container (3) receiving the milk foam.

## Revendications

1. Procédé de préparation de *caffè latte macchiato* à base de café, de lait et d'écume de lait,
**caractérisé par le fait**
**que**, préalablement à la délivrance de café, au moins une part de l'écume de lait est sollicitée par des vibrations dans la plage des ultrasons.

2. Procédé selon la revendication 1,
**caractérisé par le fait**
**que** la sollicitation de l'écume de lait, par des vibrations, a lieu dans un récipient collecteur préalable.

3. Procédé selon la revendication 2,
**caractérisé par le fait**
**que** le récipient collecteur préalable est un réceptacle à boissons.

4. Procédé selon la revendication 1,
**caractérisé par le fait**
**que** la sollicitation de l'écume de lait, par des vibrations, s'effectue dans un récipient collecteur préalable distinct ; et par le fait que dans l'enchaînement direct, à l'issue de la sollicitation de l'écume de lait, le lait liquide et ladite écume de lait sont déversés dans le réceptacle à boissons, puis du café est délivré à ce dernier.

5. Procédé selon la revendication 4,
**caractérisé par le fait**
**que** la sollicitation de l'écume de lait par des vibrations, dans le récipient collecteur préalable distinct, s'opère en mode discontinu.

6. Procédé selon la revendication 4,
**caractérisé par le fait**
**que** la sollicitation de l'écume de lait par des vibrations, dans le récipient collecteur préalable distinct, s'opère en mode continu.

7. Procédé selon l'une des revendications 1 à 6,
**caractérisé par le fait que** la sollicitation est exécutée à l'aide de vibrations comprises entre 0,5 seconde et 20 secondes, de préférence entre 1 seconde et 6 secondes.

8. Dispositif de préparation de *caffè latte macchiato,* comprenant une cafetière et une laitière, ladite cafetière étant affectée à la délivrance de café, et ladite laitière étant conçue pour délivrer au moins de l'écume de lait,
**caractérisé par le fait**
**que** ledit dispositif (1) présente des moyens (2) de sollicitation vibratoire de l'écume de lait, qui sollicitent ladite écume de lait dans la plage de fréquences ultrasoniques ; et par le fait qu'au moins une part de ladite écume de lait peut être sollicitée par lesdits moyens (2) de sollicitation vibratoire, préalablement à la délivrance de café, par des vibrations dans la plage des ultrasons.

9. Dispositif selon la revendication 8,
**caractérisé par le fait**
**que** les moyens de sollicitation vibratoire de l'écume de lait sollicitent ladite écume de lait sans aucun contact.

10. Dispositif selon au moins l'une des revendications 8 et 9,
**caractérisé par le fait**
**que** les moyens de sollicitation vibratoire de l'écume de lait sont couplés à un récipient (3) recevant ladite écume de lait.
